# EUROPEAN PATENT APPLICATION

(11) **EP 3 868 854 A1**
(43) Date of publication of application: **25.08.2021**
(21) Application number: 20158589.0
(22) Date of filing: 20.02.2020
(51) Int. Cl.: C11D 3/37, C11D 11/00, C08F 220/06, C11D 3/395

(54) **CLEANING COMPOSITIONS COMPRISING COPOLYMERS AND THEIR USE**

(71) Applicant: Clariant International Ltd, 4132 Muttenz (CH)
(72) Inventor: GUO, Xiaoqiang, 65929 Frankfurt am Main (DE); KAYSER, Christoph, 55127 Mainz (DE); PFAHLS, Margarethe, 60386 Frankfurt am Main (DE)
(74) Representative: Paczkowski, Marcus

(57) **Abstract**

Cleaning compositions e.g. containing one or more copolymers comprising structural units a) derived from one or more monomers comprising a sulfonic acid group or a sulfonate group, and structural units b) derived from one or more monomers comprising a carboxylic acid group or a carboxylate group and structural units c) derived from one or more cationic monomers are disclosed.

The cleaning compositions are e.g. suited to be used for the treatment of hard surfaces, for easier next time cleaning of hard surfaces and for preventing the build-up of limescale on hard surfaces.

## Description

The present invention relates to cleaning compositions e.g. containing one or more copolymers comprising one or more structural units a) derived from one or more monomers comprising a sulfonic acid group or a sulfonate group, and one or more structural units b) derived from one or more monomers comprising a carboxylic acid group or a carboxylate group and one or more structural units c) derived from one or more cationic monomers, to the use of the cleaning compositions for the treatment of hard surfaces, for easier next time cleaning of hard surfaces and for preventing the build-up of limescale on hard surfaces, to a method of treating or cleaning hard surfaces and to specific copolymers.

Limescale build-up, in particular on hard surfaces, is disturbing and undesired. There are already cleaning compositions which help to remove already built-up limescale. However, undesired limescale frequently reoccurs after the use of the cleaning composition applied in order to remove already built-up limescale.

Furthermore, soils other than limescale, such as soap scum, kitchen oil or fecal residues are strongly undesired and their removal requires effort. Therefore, easier next time cleaning for the subsequent cleaning procedures, which require less effort for cleaning, is desired.

US 6,255,267 B1 discloses an improved liquid toilet bowl cleanser comprising a fluorosurfactant coating agent composition, which adheres to and coats the porcelain surface of the toilet bowl during the active life of the cleanser composition and prevents the formation of toilet bowl stains and mineral deposits for a substantial period of time after manual cleaning.

US 7,202,200 B1 discloses an improved, liquid aqueous hard surface cleaner containing a fluoropolymer having a molecular weight of no less than 5 000 Daltons, further containing preferably a nonionic surfactant, optionally, a quaternary ammonium compound, a chelating agent/buffer and water to provide enhanced cleaning of hard surfaces, especially vitreous surfaces, in which the thus cleaned surface is rendered soil and stain repellent.

DE 10 2004 040 848 A1 discloses a cleaning agent for hard surfaces, especially sanitary ceramic surfaces, containing at least one polymer-analogous taurine-modified acrylic acid polymer and/or at least one polymer-analogous taurine-modified acrylic acid copolymer and/or at least one polymer-analogous taurine-modified acrylate polymer and/or copolymer. Said cleaning agent can be used in a method for improving the removeability of faecal stains in flush toilets, the taurine-modified acrylic or acrylate polymer or copolymer being used to modify hard surfaces, by the formation of a thin, shiny, stain-repellent film, and to improve the rinsability of dried residues of the cleaning agent.

There is still a need for cleaning compositions which have the property to prevent limescale build-up, and which have the advantage that they provide easier next time cleaning, preferably on hard surfaces.

Therefore, the object of the present invention is to provide cleaning compositions which have the property of preventing limescale build-up and provide easier next time cleaning, e.g. with respect to soil such as soap scum, kitchen oil or fecal residues, and preferably on hard surfaces.

It has been found that, surprisingly, this object is achieved by cleaning compositions comprising
Z1) one or more copolymers comprising components a), b) and c)
   a) one or more structural units derived from one or more monomers comprising a sulfonic acid group or a sulfonate group, and
   b) one or more structural units derived from one or more monomers comprising a carboxylic acid group or a carboxylate group, and
   c) one or more structural units derived from one or more cationic monomers,
   and
Z2) one or more surfactants
   and
Z3) water.

A subject matter of the present invention therefore is cleaning compositions comprising
Z1) one or more copolymers comprising components a), b) and c)
   a) one or more structural units derived from one or more monomers comprising a sulfonic acid group or a sulfonate group, and
   b) one or more structural units derived from one or more monomers comprising a carboxylic acid group or a carboxylate group, and
   c) one or more structural units derived from one or more cationic monomers,
   and
Z2) one or more surfactants
   and
Z3) water.

The copolymers of component Z1) of the cleaning compositions of the invention contain structural units (generally -C(R^{s1}(R^{s2})-C(R^{s3})(R^{s4})-) that are derived from monomers, i.e. that are derived from the polymerization of monomers, with polymerizable olefinic double bonds (generally C(R^{s1})(R^{s2})=C(R^{s3})(R^{s4})). The R^{s1}, R^{s2}, R^{s3} and R^{s4} radicals are not defined here in detail, but merely for the sake of completeness are specified as radicals bonded to the corresponding carbon atoms "C".

WO 97/23522 A1 discloses low molecular weight, structured polymer compositions and also discloses methods for inhibiting scale formation, precipitation or deposition; increasing dispersion of insoluble precipitates in process waters; treating cooling and boiler water; and reducing the viscosity of mineral slurries using the aforementioned polymer compositions. For example, a specific polymer of acrylic acid, 2-acrylamido-2-methylpropane sulfonic acid and diallyldimethylammonium chloride is exemplified in WO 97/23522 A1.

A sulfonate group herein refers to a salt form of its respective sulfonic acid group. The counterion preferably is selected from the group consisting of Na⁺, K⁺, NH₄⁺ and mixtures thereof.

A carboxylate group herein refers to a salt form of its respective carboxylic acid group. The counterion preferably is selected from the group consisting of Na⁺, K⁺, NH₄⁺ and mixtures thereof.

The counterions of the cationic monomers c) preferably are selected from the group consisting of HSO₄⁻, SO₄²⁻, H₃C-O-SO₃⁻, Cl⁻, Br⁻ and mixtures thereof and more preferably are selected from the group consisting of HSO₄⁻, SO₄²⁻, Cl⁻ and mixtures thereof.

The inventive cleaning compositions have the advantage that they possess the property of preventing limescale build-up and to enable easier next time cleaning, in particular on hard surfaces.

The term "hard surface" in the context of the invention means a surface made from dimensionally fixed materials, for example made of plastic, ceramic, stone, for example natural stone, porcelain, glass, wood, linoleum and metal, for example stainless steel.

"Easier next time cleaning" within the context of the present invention means in particular that after applying an inventive cleaning composition, preferably an inventive hard surface cleaner and more preferably an inventive toilet cleaner, to a hard surface, preferably a toilet, less effort is needed to clean the hard surface, preferably the toilet, in a next cleaning procedure, e.g. several days after the application of the inventive cleaning composition in the previous cleaning procedure, compared to the situation where a cleaning composition not comprising a copolymer of component Z1) of the inventive cleaning compositions is applied in the previous cleaning procedure.

Cleaning compositions of the invention bring about advantageous cleaning effects when employed on a hard surface.

Further advantages of the invention with regard to the hard surfaces on which cleaning compositions of the invention have been employed may, for example, be as follows: resoiling of the surfaces can be reduced and repeated cleaning of the surface can be facilitated. The treatment of a hard surface with cleaning compositions of the invention can advantageously remove grease residues and lime soap residues and can additionally advantageously also remove scale and reduce newly deposited scale. It can additionally minimize or prevent the formation of a biofilm on the surfaces and, in addition, the rinsing of the surfaces can be facilitated.

A further advantage of the present invention is that the copolymers of component Z1) of the inventive cleaning compositions are stable in the presence of peroxides or in the presence of hypochlorites.

Preferably, the one or more structural units of component a) of the copolymers of component Z1) contained in the inventive cleaning compositions are derived from one or more monomers selected from the group consisting of vinyl sulfonic acid, styrene sulfonic acid, 2-acrylamido-2-methylpropane sulfonic acid, their corresponding sulfonates, and mixtures thereof.

Preferably, the one or more structural units of component b) of the copolymers of component Z1) contained in the inventive cleaning compositions are derived from one or more monomers selected from the group consisting of itaconic acid, methacrylic acid, acrylic acid, maleic acid, methyl maleic acid, their corresponding carboxylates, and mixtures thereof.

Preferably, the one or more structural units of component c) of the copolymers of component Z1) contained in the inventive cleaning compositions are derived from one or more cationic monomers selected from the group consisting of
[2-(acryloyloxy)ethyl]trimethylammonium salts,
[2-(methacryloyloxy)ethyl]trimethylammonium salts,
[2-(acryloylamino)ethyl]trimethylammonium salts,
[2-(methacryloylamino)ethyl]trimethylammonium salts,
[3-(acryloylamino)propyl]trimethylammonium salts,
[3-(methacryloylamino)propyl]trimethylammonium salts,
diallyldimethylammonium salts,
and mixtures thereof.

The one or more copolymers of component Z1) of the inventive cleaning compositions preferably comprise
a) from 0.1 to 99 mol-%, more preferably from 15 to 30 mol-% and even more preferably from 20 to 27 mol-%, of one or more structural units of component a), and
b) from 0.1 to 99 mol-%, more preferably from 60 to 80 mol-% and even more preferably from 65 to 77 mol-% of one or more structural units of component b), and
c) from 0.1 to 99 mol-%, more preferably from 0.5 to 15 mol-% and even more preferably from 1 to 10 mol-% of one or more structural units of component c),
   the mole percentages mentioned for components a), b) and c) in each case are based on the sum of the moles of the components a), b) and c) of the copolymer.

In one preferred embodiment of the present invention, the one or more copolymers of component Z1) of the inventive cleaning compositions, in addition to the structural units of components a), b) and c) comprise one or more structural units of component d) which differ from the structural units of components a), b) and c).

In this preferred embodiment of the present invention, the one or more copolymers of component Z1) of the cleaning compositions of the invention preferably comprise
a) from 0.1 to 99 mol-%, more preferably from 15 to 30 mol-% and even more preferably from 20 to 27 mol-%, of one or more structural units of component a), and
b) from 0.1 to 99 mol-%, more preferably from 60 to 80 mol-% and even more preferably from 65 to 77 mol-% of one or more structural units of component b), and
c) from 0.1 to 99 mol-%, more preferably from 0.5 to 15 mol-% and even more preferably from 1 to 10 mol-% of one or more structural units of component c), and
d) from 0.1 to 99 mol-%, more preferably from 0.1 to 24.5 mol-% and even more preferably from 0.5 to 14 mol-%, of one or more structural units of component d),
   the mole percentages mentioned for components a), b), c) and d) in each case are based on the sum of the moles of the components a), b), c) and d) of the copolymer.

In one preferred embodiment of the invention, the one or more structural units of component d) of the one or more copolymers of component Z1) of the inventive cleaning compositions are derived from one or more monomers selected from the group consisting of noncationic acrylamides, noncationic methacrylamides, N-vinyl-substituted lactams having 5 to 7 ring atoms, and mixtures thereof.

In a more preferred embodiment of the invention, the one or more structural units of component d) of the one or more copolymers of component Z1) of the inventive cleaning compositions are selected from the group consisting of structural units derived from one or more N-vinyl-substituted lactams having 5 to 7 ring atoms, structural units derived from one or more monomers of the following formulae (IV) and/or (V): 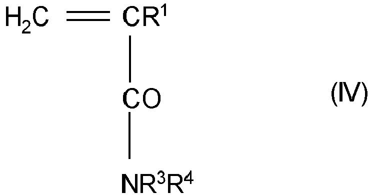 in which
- R¹: is the same or different and is hydrogen and/or methyl, and
- R³ and R⁴: are each the same or different and are each independently represented by hydrogen, an aliphatic hydrocarbyl radical having 1 to 20 and preferably 1 to 4 carbon atoms, a cycloaliphatic hydrocarbyl radical having 5 to 20 and preferably 5 to 8 carbon atoms, an aryl radical having 6 to 14 carbon atoms, an alkylaryl radical having 7 to 14 carbon atoms, a branched or unbranched C₁-C₅-monohydroxyalkyl group and/or polyethylene glycol (PEG), 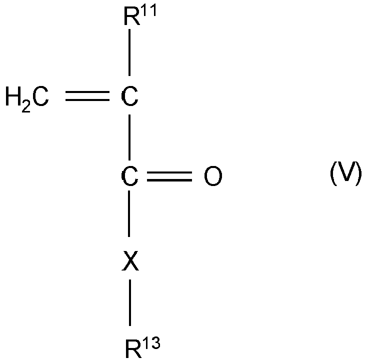
in which
- R¹¹: is the same or different and is represented by H and/or methyl;
- X: is the same or different and is represented by NH-(CₙH₂ₙ) with n = 1, 2, 3 or 4; and
- R¹³: is the same or different and is represented by OH, N(CH₃)₂, PO₃H₂ and/or O-PO₃H₂,
and mixtures thereof.

A preferred structural unit derived from N-vinyl-substituted lactams having 5 to 7 ring atoms is the structural unit derived from N-vinylpyrrolidone.

The PO₃H₂ and O-PO₃H₂ groups in the structural units of the formula (V) may also be present in salt form, preferably in the form of the NH₄⁺, alkali metal or alkaline earth metal salt and more preferably in the form of the NH₄⁺ salt or of the Na⁺ salt.

Among the structural units of the formula (V) in which R¹³ is N(CH₃)₂, preference is given to those structural units that are derived from one or more monomers selected from the group consisting of [3-(methacryloylamino)propyl]dimethylamine (R¹¹ = methyl; X = NH-(CₙH₂ₙ) with n = 3 and R¹³ = N(CH₃)₂), [3-(acryloylamino)propyl]dimethylamine (R¹¹ = H; X = NH-(CₙH₂ₙ) with n = 3 and R¹³ = N(CH₃)₂) and mixtures thereof.

Among the structural units of the formula (V), preference is given to those that are derived from one or more monomers selected from the group consisting of [3-(acryloylamino)propyl]dimethylamine, [3-(methacryloylamino)propyl] dimethylamine and mixtures thereof.

In an even more preferred embodiment of the invention, the one or more structural units of component d) of the one or more copolymers of component Z1) of the inventive cleaning compositions are derived from one or more monomers selected from the group consisting of acrylamide, methacrylamide, N-methylacrylamide, N,N-dimethylacrylamide, N-ethylacrylamide, N-cyclohexylacrylamide, N-benzylacrylamide, N-methylolacrylamide, N-isopropylacrylamide, N-tert-butylacrylamide, and mixtures thereof.

In another preferred embodiment of the invention, the one or more structural units of component d) of the one or more copolymers of component Z1) of the inventive cleaning compositions are selected from the group consisting of structural units derived from one or more monomers of the following formula (VIII): 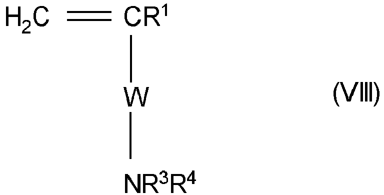 in which
- W: is the same or different and is represented by -CO-O-(CH₂)ₓ,
- x: is an integer from 1 to 6, preferably 2 or 3,
- R¹: is the same or different and is hydrogen and/or methyl, and
- R³ and R⁴: are each the same or different and are each independently represented by hydrogen, an aliphatic hydrocarbyl radical having 1 to 20 and preferably 1 to 4 carbon atoms, a cycloaliphatic hydrocarbyl radical having 5 to 20 and preferably 5 to 8 carbon atoms, an aryl radical having 6 to 14 carbon atoms and/or polyethylene glycol (PEG),
and mixtures thereof.

Among the structural units of the formula (VIII), preference is given to those that are derived from one or more monomers selected from the group consisting of [2-(methacryloyloxy)ethyl]dimethylamine, [2-(acryloyloxy)ethyl]dimethylamine, [2-(methacryloyloxy)ethyl]diethylamine, [2-(acryloyloxy)ethyl]diethylamine, and mixtures thereof.

In another preferred embodiment of the invention, the one or more structural units of component d) of the one or more copolymers of component Z1) of the inventive cleaning compositions are selected from the group consisting of structural units derived from one or more monomers of the following formula (IX): 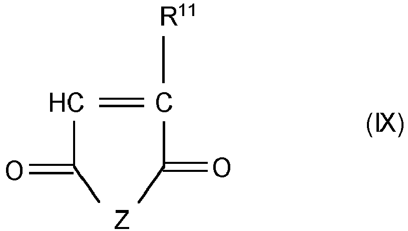 in which
- R¹¹: is the same or different and is represented by H and/or methyl;
- Z: is represented by NH,
and mixtures thereof.

In another preferred embodiment of the invention, the one or more structural units of component d) of the one or more copolymers of component Z1) of the inventive cleaning compositions are selected from the group consisting of structural units derived from one or more monomers of the following formulae (Va), (Vb) and/or (Vc): 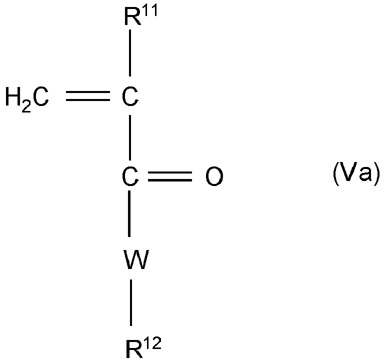 in which
- R¹¹: is the same or different and is represented by H and/or methyl;
- W: is the same or different and is represented by O;
R¹² is the same or different and is represented by a branched or unbranched C₁-C₅-monohydroxyalkyl group; 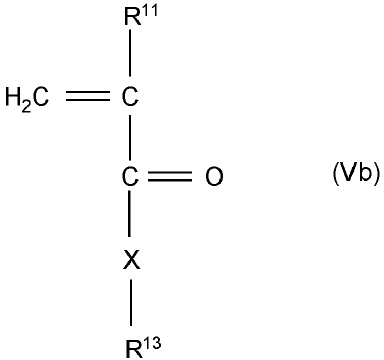 in which
- R¹¹: is the same or different and is represented by H and/or methyl;
- X: is the same or different and is represented by O-(CₙH₂ₙ) with n = 1, 2, 3 or 4;
- R¹³: is the same or different and is represented by OH, PO₃H₂ and/or O-PO₃H₂; 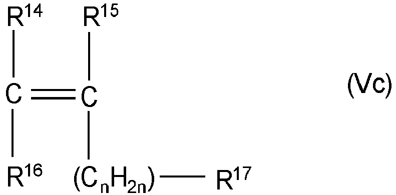
in which
- R¹⁴, R¹⁵ and R¹⁶: are each the same or different and are each independently represented by H and/or an unbranched or branched C₁-C₄-alkyl group;
- n: is the same or different and is represented by 0, 1, 2, 3 and/or 4;
- R¹⁷: is the same or different and is represented by (C₆H₅), OH, OR^{y} where R^{y} is an alkyl group having 1 to 8 and preferably 4 carbon atoms, and/or -OOCCH₃,
and mixtures thereof.

The PO₃H₂ and O-PO₃H₂ groups in the structural units of the formula (Vb) may also be present in salt form, preferably in the form of the NH₄⁺, alkali metal or alkaline earth metal salt and more preferably in the form of the NH₄⁺ salt or of the Na⁺ salt.

Among the structural units of the formula (Vc), preference is given to those that are derived from one or more monomers selected from the group consisting of vinyl butyl ether, vinyl acetate, and mixtures thereof.

In a particularly preferred embodiment of the present invention, the one or more copolymers of component Z1) of the cleaning compositions of the invention consist of structural units of components a), b) and c) or of structural units of components a), b) c) and d) and preferably of structural units of components a), b) and c).

Especially preferably, the one or more copolymers of component Z1) of the cleaning compositions of the invention consist of components a), b) and c)
a) 15 to 30 mol-%, preferably 20 to 27 mol-%, of structural units derived from one monomer comprising a sulfonic acid group or a sulfonate group, preferably derived from one monomer selected from the group consisting of vinyl sulfonic acid, styrene sulfonic acid, 2-acrylamido-2-methylpropane sulfonic acid, and their corresponding sulfonates, and
b) 60 to 80 mol-%, preferably 65 to 77 mol-%, of structural units derived from one monomer comprising a carboxylic acid group or a carboxylate group, preferably derived from one monomer selected from the group consisting of itaconic acid, methacrylic acid, acrylic acid, maleic acid, methyl maleic acid, and their corresponding carboxylates, and
c) 0.5 to 15 mol-%, preferably 1 to 10 mol-%, of structural units derived from one monomer selected from the group consisting of diallyl dimethyl ammonium salts, (3-acrylamidopropyl)trimethylammonium salts, and [3-(methacryloylamino)propyl]trimethylammonium salts,
   the mole percentages mentioned for components a), b) and c) in each case are based on the sum of the moles of the components a), b) and c) of the copolymer, with the proviso that if the copolymer comprises structural units that only differ in the counterion of the sulfonic acid group or the sulfonate group of component a), or only differ in the counterion of the carboxylic acid group or the carboxylate group of component b), or only differ in the counterion of the ammonium salts of component c), the respective structural units in each of the three cases are considered as being derived from only one monomer.

An example regarding "comprises structural units that only differ in the counterion of the sulfonic acid group or the sulfonate group of component a)" is as follows:

The structural units a1) and a2) only differ in the counterion of the sulfonic acid group or the sulfonate group: a1) has H⁺ as the counterion and a2) has Na⁺ as the counterion. Both structural units are considered as being derived from only one monomer.

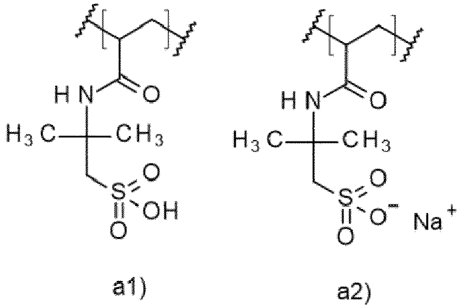

An example regarding "comprises structural units that only differ in the counterion of the carboxylic acid group or the carboxylate group of component b)" is as follows:

The structural units b1) and b2) only differ in the counterion of the carboxylic acid group or the carboxylate group: b1) has H⁺ as the counterion and b2) has Na⁺ as the counterion. Both structural units are considered as being derived from only one monomer.

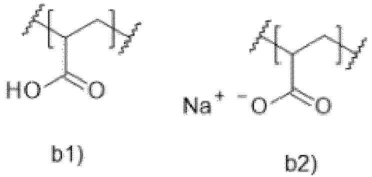

An example regarding "comprises structural units that only differ in the counterion of the ammonium salts of component c)" is as follows:

The structural units c1) and c2) only differ in the counterion of the ammonium salts: c1) has Cl⁻ as the counterion and c2) has Br⁻ as the counterion. Both structural units are considered as being derived from only one monomer.

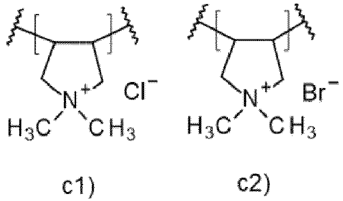

Extraordinarily preferably, the one or more copolymers of component Z1) of the cleaning compositions of the invention consist of components a), b) and c)
a) 15 to 30 mol-%, preferably 20 to 27 mol-%, of structural units derived from 2-acrylamido-2-methylpropane sulfonic acid and/or one or more of its salts and preferably from 2-acrylamido-2-methylpropane sulfonic acid and/or its sodium salt, and
b) 60 to 80 mol-%, preferably 65 to 77 mol-%, of structural units derived from acrylic acid and/or one or more of its salts and preferably from acrylic acid and/or its sodium salt, and
c) 0.5 to 15 mol-%, preferably 1 to 10 mol-%, of structural units derived from one or more diallyl dimethyl ammonium salts and preferably from diallyl dimethyl ammonium chloride,
   the mole percentages mentioned for components a), b) and c) in each case are based on the sum of the moles of the components a), b) and c) of the copolymer.

In a preferred embodiment of the present invention, the one or more copolymers of component Z1) of the cleaning compositions of the invention are obtainable by free radical polymerization of the monomers according to components a), b) and c) or of the monomers according to components a), b), c) and d), and preferably of the monomers according to components a), b) and c), preferably in water, preferably at 50 to 120°C and more preferably at 80 to 120°C, and preferably initiated by sodium persulfate. The above-given preferred embodiments, more preferred embodiments, etc., e.g. with respect to the monomers or their amounts, apply accordingly to the here-described preferred embodiment of the present invention.

Preferably, the structural units of components a), b), c), and, if present, component d) of the one or more copolymers of component Z1) of the inventive cleaning compositions are present in the copolymer in a random, blockwise, alternating or gradient distribution.

Preferably, the weight average molecular weight M_{w} of the one or more copolymers of component Z1) of the inventive cleaning compositions is from 10 000 to 250 000 g/mol, more preferably from 15 000 to 200 000 g/mol and even more preferably from 20 000 to 150 000 g/mol.

The weight-average molecular weights are determined with GPC following the OECD Guideline for Testing of Chemicals 118 (2016) DIN 55672-1 (1955).

GPC, gel permeation chromatography, is a special type of liquid chromatography in which the sample is separated according to the hydrodynamic volumes of the individual constituents. Detection is done by measuring refractive index. To attribute actual molecular weight values to the curve, it is necessary to calibrate the column by passing down polymers of known molecular weight. The calibration before measuring the inventive copolymers is done with polyacrylic acid standards in the range from 1 250 - 1 020 000 Dalton.

The columns used in the measurement are one PSS Suprema Guard (10 µm, 50 mm × 8.0 mm ID), one PSS Suprema 100 Å (10 µm, 300 mm × 8.0 mm ID) and two PSS Suprema 3000 Å (10 µm, 300 mm × 8.0 mm ID). Polymer samples are prepared in 0.07 mol/L disodium hydrogen phosphate as a 5 g/L solution. 50 µL of the polymer solution is injected into the columns. A solution of 0.07 mol/L disodium hydrogen phosphate is used as eluent. The measurement is done at 23°C with the flow rate of 1 mL/min. PSS-WinGPC Version 8.2 is used to evaluate the measuring result.

The copolymers of component Z1) of the cleaning compositions of the invention can be prepared by methods familiar to those skilled in the art. More preferably, the copolymers of component Z1) can be prepared by free-radical solution polymerization. Standard solvents may preferably be polar solvents such as alcohols or water, and alcohol-water mixtures. The polymerization is initiated by free-radical sources, for example inorganic persulfates, organic azo compounds, peroxides, inorganic redox systems, or UV light. In an illustrative procedure, the monomers for preparation of the copolymers of component Z1) are dissolved in the solvent, oxygen is driven out, then the temperature is increased, and the free-radical initiator is metered in. The copolymerization is then conducted at the desired temperature for the desired period of time. The reaction mixture is then optionally cooled and the copolymer formed is either processed further in solution or worked up; for example, the solution containing the copolymer can be concentrated by partly evaporating off the solvent or else the solvent can be removed completely by evaporating it off or else the copolymer can be isolated in some other way, for example by freeze-drying or precipitation.

Preferably, the cleaning compositions of the invention comprise the one or more copolymers of component Z1) in an amount from 0.001 to 10% by weight, more preferably in an amount from 0.01 to 5% by weight and even more preferably in an amount from 0.02 to 0.5% by weight, in each case based on the total weight of the cleaning composition.

### Component Z2)

The cleaning compositions of the invention comprise one or more surfactants as component Z2).

Preferably, the one or more surfactants of component Z2) of the cleaning compositions of the invention are selected from the group consisting of anionic surfactants, nonionic surfactants, amphoteric surfactants, cationic surfactants, and mixtures thereof.

The cleaning compositions of the invention may optionally comprise anionic surfactants, for example alkylbenzenesulfonates, alkyl sulfates, alkyl ether sulfates, alkanesulfonates, fatty acids, alkyl ether carboxylic acids, sulfosuccinates, isethionates, taurates, glycinates and/or acylglutamates. The alkyl chains of the surfactants mentioned may be of synthetic or natural origin and consist of 8 to 30, preferably 8 to 18 and more preferably 12 to 14 carbon atoms in a linear or branched arrangement.

Anionic surfactants that are used in accordance with the invention are preferably aliphatic sulfates such as fatty alcohol sulfates, fatty alcohol ether sulfates, dialkyl ether sulfates, monoglyceride sulfates, and aliphatic sulfonates such as alkanesulfonates, olefinsulfonates, ether sulfonates, n-alkyl ether sulfonates, ester sulfonates and lignosulfonates. Likewise, usable in the context of the present invention are alkylbenzenesulfonates, fatty acid cyanamides, sulfosuccinates (sulfosuccinic esters), sulfosuccinamates, sulfosuccinamides, fatty acid isethionates, acylaminoalkanesulfonates (fatty acid taurides), fatty acid sarcosinates, ether carboxylic acids and alkyl (ether) phosphates, and also [alpha]-sulfo fatty acid salts, acylglutamates, monoglyceride disulfates and alkyl ethers of glycerol disulfate.

Among these, preference is given to the fatty alcohol sulfates and/or fatty alcohol ether sulfates, especially the fatty alcohol sulfates. Fatty alcohol sulfates are products of sulfation reactions on corresponding alcohols, while fatty alcohol ether sulfates are products of sulfation reactions on alkoxylated alcohols. The person skilled in the art generally understands alkoxylated alcohols to mean the reaction products of alkylene oxide, preferably ethylene oxide, with alcohols, in the context of the present invention preferably with longer-chain alcohols. In general, n moles of ethylene oxide and one mole of alcohol, depending on the reaction conditions, give rise to a complex mixture of addition products of different degrees of ethoxylation. A further embodiment of the alkoxylation involves the use of mixtures of alkylene oxides, preferably of the mixture of ethylene oxide and propylene oxide. Preferred fatty alcohol ether sulfates are the sulfates of fatty alcohols having low levels of ethoxylation with 1 to 4 ethylene oxide units (EO), especially 1 to 2 EO, for example 1.3 EO.

Particular preference is given to alkylbenzenesulfonate, alkanesulfonate, alkyl ether sulfate or alkyl sulfate.

The anionic surfactants are typically used in the form of salts, but also in acid form. The salts are preferably alkali metal salts, alkaline earth metal salts, ammonium salts and mono-, di- or trialkanolammonium salts, for example mono-, di- or triethanolammonium salts, especially lithium, sodium, potassium or ammonium salts, more preferably sodium or potassium salts, especially preferably sodium salts.

Further surfactants may be nonionic surfactants, amphoteric surfactants and/or cationic surfactants, for example betaines, amidobetaines, amine oxides, amidoamine oxides, fatty alcohol polyglycol ethers, alkyl polyglycosides, N-acylglucamines, preferably N-acyl-N-methylglucamines, or else quaternary ammonium compounds.

Further nonionic surfactants may, for example, be alkoxylates, such as polyglycol ethers, fatty alcohol polyglycol ethers (fatty alcohol alkoxylates), alkyl phenol polyglycol ethers, end group-capped polyglycol ethers, mixed ethers and hydroxy mixed ethers, and fatty acid polyglycol esters. Likewise, usable are ethylene oxide-propylene oxide block copolymers and fatty acid alkanolamides and fatty acid polyglycol ethers. A further important class of nonionic surfactants that can be used in accordance with the invention is that of the polyol surfactants and here particularly the glycosurfactants, such as alkyl polyglycosides, especially alkyl polyglucosides and N-acylglucamines, preferably N-acyl-N-methylglucamines.

Suitable fatty alcohol polyglycol ethers are ethylene oxide (EO)- and/or propylene oxide (PO)-alkoxylated, unbranched or branched, saturated or unsaturated C₈-C₂₂ alcohols having an alkoxylation level of up to 30, preferably ethoxylated C₁₀-C₁₈ fatty alcohols having an ethoxylation level of less than 30, more preferably 1 to 20, especially preferably 1 to 12 and exceptionally preferably 1 to 8, for example C₁₂-C₁₄ fatty alcohol ethoxylates with 8 EO.

Alkyl polyglycosides are surfactants that can be obtained by the reaction of sugars and alcohols by the relevant methods of preparative organic chemistry, which results in a mixture of monoalkylated, oligomeric or polymeric sugars according to the manner of preparation. Preferred alkyl polyglycosides are the alkyl polyglucosides, where the alcohol is more preferably a long-chain fatty alcohol or a mixture of long-chain fatty alcohols having branched or unbranched C₈- to C₁₈-alkyl chains and the oligomerization level (DP) of the sugars is from 1 to 10, preferably from 1 to 6, more preferably from 1.1 to 3 and especially preferably from 1.1 to 1.7, for example C₈-C₁₀-alkyl-1,5-glucoside (DP of 1.5).

The amphosurfactants (zwitterionic surfactants) that are usable in accordance with the invention include betaines, amine oxides, alkylamidoalkylamines, alkyl-substituted amino acids, acylated amino acids and biosurfactants.

Suitable betaines are the alkyl betaines, the alkylamidobetaines, the imidazolinium betaines, the sulfobetaines (name according to INCI: Sultaines; INCI: International Nomenclature of Cosmetic Ingredients) and the amidosulfobetaines, and also the phosphobetaines. Examples of suitable betaines and sulfobetaines are the following compounds named according to INCI: Almondamidopropyl Betaine, Apricotamidopropylbetaine, Avocadamidopropylbetaine, Babassuamidopropylbetaine, Behenamidopropylbetaine, Behenylbetaine, Betaine, Canolamidopropylbetaine, Capryl/Capramidopropylbetaine, Carnitine, Cetylbetaine, Cocamidoethylbetaine, Cocamidopropylbetaine, Cocamidopropylhydroxysultaine, Cocobetaine, Cocohydroxysultaine, Coco/Oleamidopropylbetaine, Coco-Sultaine, Decylbetaine, Dihydroxyethyloleylglycinate, Dihydroxyethyl Soy Glycinate, Dihydroxyethylstearylglycinate, Dihydroxyethyl Tallow Glycinate, Dimethicone Propyl PG-Betaine, Erucamidopropylhydroxysultaine, Hydrogenated Tallow Betaine, Isostearamidopropylbetaine, Lauramidopropylbetaine, Laurylbetaine, Laurylhydroxysultaine, Laurylsultaine, Milkamidopropylbetaine, Minkamidopropylbetaine, Myristamidopropylbetaine, Myristylbetaine, Oleamidopropylbetaine, Oleamidopropylhydroxysultaine, Oleylbetaine, Olivamidopropylbetaine, Palmamidopropylbetaine, Palmitamidopropylbetaine, Palmitoyl Carnitine, Palm Kernelamidopropyl Betaine, Polytetrafluoroethylene Acetoxypropyl Betaine, Ricinoleamidopropylbetaine, Sesamidopropylbetaine, Soyamidopropylbetaine, Stearamidopropylbetaine, Stearylbetaine, Tallowamidopropylbetaine, Tallowamidopropylhydroxysultaine, Tallowbetaine, Tallowdihydroxyethylbetaine, Undecylenamidopropylbetaine and Wheat Germamidopropyl Betaine.

The amine oxides suitable in accordance with the invention include alkylamine oxides, especially alkyldimethylamine oxides, alkylamidoamine oxides and alkoxyalkylamine oxides.

Examples of suitable amine oxides are the following compounds named according to INCI: Almondamidopropylamine Oxide, Babassuamidopropylamine Oxide, Behenamine Oxide, Cocamidopropyl Amine Oxide, Cocamidopropylamine Oxide, Cocamine Oxide, Coco-Morpholine Oxide, Decylamine Oxide, Decyltetradecylamine Oxide, Diaminopyrimidine Oxide, Dihydroxyethyl C₈-C₁₀ Alkoxypropylamine Oxide, Dihydroxyethyl C₉-C₁₁ Alkoxypropylamine Oxide, Dihydroxyethyl C₁₂-C₁₅ Alkoxypropylamine Oxide, Dihydroxyethyl Cocamine Oxide, Dihydroxyethyl Lauramine Oxide, Dihydroxyethyl Stearamine Oxide, Dihydroxyethyl Tallowamine Oxide, Hydrogenated Palm Kernel Amine Oxide, Hydrogenated Tallowamine Oxide, Hydroxyethyl Hydroxypropyl C₁₂-C₁₅ Alkoxypropylamine Oxide, Isostearamidopropylamine Oxide, Isostearamidopropyl Morpholine Oxide, Lauramidopropylamine Oxide, Lauramine Oxide, Methyl Morpholine Oxide, Milkamidopropyl Amine Oxide, Minkamidopropylamine Oxide, Myristamidopropylamine Oxide, Myristamine Oxide, Myristyl/Cetyl Amine Oxide, Oleamidopropylamine Oxide, Oleamine Oxide, Olivamidopropylamine Oxide, Palmitamidopropylamine Oxide, Palmitamine Oxide, PEG-3 Lauramine Oxide, Potassium Dihydroxyethyl Cocamine Oxide Phosphate, Potassium Trisphosphonomethylamine Oxide, Sesamidopropylamine Oxide, Soyamidopropylamine Oxide, Stearamidopropylamine Oxide, Stearamine Oxide, Tallowamidopropylamine Oxide, Tallowamine Oxide, Undecylenamidopropylamine Oxide and Wheat Germamidopropylamine Oxide.

Illustrative alkylamidoalkylamines are the following compounds named according to INCI: Cocoamphodipropionic Acid, Cocobetainamido Amphopropionate, DEA-Cocoamphodipropionate, Disodium Caproamphodiacetate, Disodium Caproamphodipropionate, Disodium Capryloamphodiacetate, Disodium Capryloamphodipropionate, Disodium Cocoamphocarboxyethylhydroxypropylsulfonate, Disodium Cocoamphodiacetate, Disodium Cocoamphodipropionate, Disodium Isostearoamphodiacetate, Disodium Isostearoamphodipropionate, Disodium Laureth-5 Carboxyamphodiacetate, Disodium Lauroamphodiacetate, Disodium Lauroamphodipropionate, Disodium Oleoamphodipropionate, Disodium PPG-2-Isodeceth-7 Carboxyamphodiacetate, Disodium Stearoamphodiacetate, Disodium Tallowamphodiacetate, Disodium Wheatgermamphodiacetate, Lauroamphodipropionic Acid, Quaternium-85, Sodium Caproamphoacetate, Sodium Caproamphohydroxypropylsulfonate, Sodium Caproamphopropionate, Sodium Capryloamphoacetate, Sodium Capryloamphohydroxypropylsulfonate, Sodium Capryloamphopropionate, Sodium Cocoamphoacetate, Sodium Cocoamphohydroxypropylsulfonate, Sodium Cocoamphopropionate, Sodium Cornamphopropionate, Sodium Isostearoamphoacetate, Sodium Isostearoamphopropionate, Sodium Lauroamphoacetate, Sodium Lauroamphohydroxypropylsulfonate, Sodium Lauroampho PG-Acetate Phosphate, Sodium Lauroamphopropionate, Sodium Myristoamphoacetate, Sodium Oleoamphoacetate, Sodium Oleoamphohydroxypropylsulfonate, Sodium Oleoamphopropionate, Sodium Ricinoleoamphoacetate, Sodium Stearoamphoacetate, Sodium Stearoamphohydroxypropylsulfonate, Sodium Stearoamphopropionate, Sodium Tallamphopropionate, Sodium Tallowamphoacetate, Sodium Undecylenoamphoacetate, Sodium Undecylenoamphopropionate, Sodium Wheat Germamphoacetate and Trisodium Lauroampho PG-Acetate Chloride Phosphate.

Illustrative alkyl-substituted amino acids are the following compounds named according to INCI: Aminopropyl Laurylglutamine, Cocaminobutyric Acid, Cocaminopropionic Acid, DEA-Lauraminopropionate, Disodium Cocaminopropyl Iminodiacetate, Disodium Dicarboxyethyl Cocopropylenediamine, Disodium Lauriminodipropionate, Disodium Steariminodipropionate, Disodium Tallowiminodipropionate, Lauraminopropionic Acid, Lauryl Aminopropylglycine, Lauryl Diethylenediaminoglycine, Myristaminopropionic Acid, Sodium C₁₂-C₁₅ Alkoxypropyl Iminodipropionate, Sodium Cocaminopropionate, Sodium Lauraminopropionate, Sodium Lauriminodipropionate, Sodium Lauroyl Methylaminopropionate, TEA-Lauraminopropionate and TEA-Myristam inopropionate.

More preferably, the one or more surfactants of component Z2) of the cleaning compositions of the invention are selected from the group consisting of fatty alcohol polyglycol ethers, alkyl polyglycosides, alkylbenzenesulfonates, alkanesulfonates, alkyl ether sulfates, alkyl sulfates, N-acylglucamines, preferably N-acyl-N-methylglucamines, quaternary ammonium compounds, and mixtures thereof.

The amount of the one or more surfactants of component Z2) in the cleaning compositions of the invention is preferably from 0.1 to 20% by weight and more preferably from 0.1 to 10% by weight, in each case based on the total weight of the cleaning composition of the invention.

### Component Z3)

The amount of water in the cleaning compositions of the invention adds up to 100% by weight of the cleaning compositions. The proportion of water in the cleaning compositions of the invention is preferably from 30 to 99.8% by weight, more preferably from 40 to 95% by weight and especially preferably from 70 to 90% by weight, based in each case on the total weight of the cleaning compositions of the invention.

Preferably, the cleaning compositions of the invention comprise, in addition to the one or more copolymers of component Z1), the one or more surfactants of component Z2) and water of component Z3), one or more further substances selected from components Z4), Z5), Z6) and/or Z7):
Z4) one or more pH regulators as component Z4),
Z5) one or more complexing agents as component Z5),
Z6) one or more solvents other than water as component Z6),
Z7) one or more further additives, preferably selected from the group consisting of viscosity regulators, enzymes, bleaches, preservatives, fragrances and dyes, as component Z7),
   and the pH of the cleaning composition is preferably from 1 to 14 and more preferably from 3 to 13.

### Component Z4)

A pH regulator adjusts the pH of the entire cleaning composition to basic (pH > 7), neutral (pH = 7) or acidic (pH < 7). Both acids and bases can be used as pH regulators.

The acids may be inorganic acids, for example hydrochloric acid, sulfuric acid, nitric acid, amidosulfonic acid and/or phosphoric acid.

In a preferred embodiment of the invention, the acids present are organic acids, more preferably non-complexing acids such as lactic acid, formic acid, acetic acid, glycolic acid and/or gluconic acid. Further preferred acids are malic acid, citric acid, tartaric acid, adipic acid and/or succinic acid. In a preferred embodiment, the cleaning compositions of the invention comprise an acid. In a further preferred embodiment of the invention, the cleaning compositions of the invention comprise a mixture of two or more acids.

The amount of acid used, if it is not 0%, is preferably from 0.1 to 10% by weight, more preferably from 0.2 to 5% by weight and especially preferably from 1 to 3% by weight, based in each case on the total weight of the cleaning composition of the invention.

In a further preferred embodiment of the invention, for buffering of the pH, it is also possible to add a salt of an acid, especially the sodium, potassium or magnesium salt, but also further alkali metal or alkaline earth metal salts or else ammonium salts, especially of volatile amines such as monoethanolamine, ammonia, diethanolamine or else triethanolamine.

The bases are usually used to adjust the cleaning composition to basic (pH > 7). In a preferred embodiment of the invention, the bases are selected from the group consisting of sodium hydroxide, potassium hydroxide, sodium carbonate, potassium carbonate, ammonia, and mixtures thereof, and preferably from the group consisting of sodium hydroxide, potassium hydroxide and mixtures thereof. In a preferred embodiment, the cleaning compositions of the invention comprise a base. In a further preferred embodiment of the invention, the cleaning compositions of the invention comprise a mixture of two or more bases.

The amount of base used, if it is not 0%, is preferably from 0.1 to 10% by weight, more preferably from 0.2 to 5% by weight and especially preferably from 1 to 3% by weight, based in each case on the total weight of the cleaning composition of the invention.

### Component Z5)

Suitable complexing agents are known to those skilled in the art and are described by way of example in DE-A-10 2009 001 559.

Complexing agents (INCI Chelating Agents), also called sequestrants, are ingredients able to complex and inactivate metal ions, in order to prevent their adverse effects on the stability or appearance of the compositions, for example cloudiness. It is firstly important to complex the calcium and magnesium ions of water hardness that are incompatible with numerous ingredients. The complexation of the ions of heavy metals such as iron or copper secondly delays the oxidative breakdown of the finished compositions. Moreover, the complexing agents promote detergent action.

Suitable examples are the following complexing agents named according to INCI: Aminotrimethylene, Phosphonic Acid, Beta-Alanine Diacetic Acid, Calcium Disodium EDTA, Citric Acid, Cyclodextrin, Cyclohexanediamine Tetraacetic Acid, Diammonium Citrate, Diammonium EDTA, Diethylenetriamine Pentamethylene Phosphonic Acid, Dipotassium EDTA, Disodium Azacycloheptane Diphosphonate, Disodium EDTA, Disodium Pyrophosphate, EDTA, Etidronic Acid, Galactaric Acid, Gluconic Acid, Glucuronic Acid, HEDTA, Hydroxypropyl Cyclodextrin, Methyl Cyclodextrin, Pentapotassium Triphosphate, Pentasodium Aminotrimethylene Phosphonate, Pentasodium Ethylenediamine Tetramethylene Phosphonate, Pentasodium Pentetate, Pentasodium Triphosphate, Pentetic Acid, Phytic Acid, Potassium Citrate, Potassium EDTMP, Potassium Gluconate, Potassium Polyphosphate, Potassium Trisphosphonomethylamine Oxide, Ribonic Acid, Sodium Chitosan Methylene Phosphonate, Sodium Citrate, Sodium Diethylenetriamine Pentamethylene Phosphonate, Sodium Dihydroxyethylglycinate, Sodium EDTMP, Sodium Gluceptate, Sodium Gluconate, Sodium Glycereth-1 Polyphosphate, Sodium Hexametaphosphate, Sodium Metaphosphate, Sodium Metasilicate, Sodium Phytate, Sodium Polydimethylglycinophenolsulfonate, Sodium Trimetaphosphate, TEA-EDTA, TEA-Polyphosphate, Tetrahydroxyethyl Ethylenediamine, Tetrahydroxypropyl Ethylenediamine, Tetrapotassium Etidronate, Tetrapotassium Pyrophosphate, Tetrasodium EDTA, Tetrasodium Etidronate, Tetrasodium Pyrophosphate, Tripotassium EDTA, Trisodium Dicarboxymethyl Alaninate, Trisodium EDTA, Trisodium HEDTA, Trisodium NTA and Trisodium Phosphate.

The proportion of component Z5) in the cleaning composition of the invention, if it is not 0%, is preferably from 0.1 to 10% by weight, more preferably from 0.1 to 3.0% by weight and especially preferably from 0.1 to 1.0% by weight, based in each case on the total weight of the cleaning composition of the invention.

### Component Z6)

Suitable water-miscible solvents are known to those skilled in the art and are described by way of example in US 2005/0239674. Preference is given to using alcohols, glycerol, glycols and glycol ethers, preferably lower alcohols such as ethanol, isopropanol, butanol, isobutanol, or alkylene glycols, e.g. propylene glycol, and also glycol ethers, e.g. ethylene glycol n-butyl ether or propylene glycol n-butyl ether.

In a preferred embodiment, mixtures of two or more solvents are used.

The proportion of component Z6) in the cleaning composition of the invention, if it is not 0%, is preferably from 0.1 to 10% by weight, more preferably from 0.1 to 3% by weight and especially preferably from 0.5 to 1.5% by weight.

### Component Z7)

Suitable additives are further customary ingredients of detergents, for example disinfectants, dyes, fragrances, buffers, viscosity regulators, corrosion inhibitors, organic and inorganic salts, optical brighteners, bleaches, antioxidants, opacifiers, hydrotropes, abrasives, preservatives, oxidizing agents, insecticides and/or other polymers.

According to the invention, it is possible to add bleaches to the composition. Suitable bleaches include peroxides, peracids and/or perborates or hypochlorites.

Peroxides, preferably H₂O₂, are only suitable in acidic cleaning compositions. If a cleaning composition contains peroxides, the peroxides content is preferably from 0.1 to 10% by weight, more preferably from 0.1 to 8% by weight and even more preferably from 0.1 to 5% by weight, based in each case on the total weight of the cleaning composition of the invention.

In a preferred embodiment of the invention, the inventive cleaning compositions comprise peroxides, preferably H₂O₂, preferably in an amount from 0.1 to 10% by weight, more preferably in an amount from 0.1 to 8% by weight and even more preferably in an amount from 0.1 to 5% by weight, in each case based on the total weight of the cleaning composition. An advantage of the present invention is that the copolymers of component Z1) of the inventive cleaning compositions are stable in the presence of peroxides, preferably H₂O₂.

Hypochlorites, preferably sodium hypochlorite, are only suitable in basic cleaning compositions. If a cleaning composition contains hypochlorites, the hypochlorites content is preferably from 0.5 to 6% by weight and more preferably from 1 to 5% by weight, based in each case on the total weight of the cleaning composition of the invention.

In a preferred embodiment of the invention, the inventive cleaning compositions comprise hypochlorite, preferably sodium hypochlorite, preferably in an amount from 0.5 to 6% by weight and more preferably in an amount from 1 to 5% by weight, in each case based on the total weight of the cleaning composition. An advantage of the present invention is that the copolymers of component Z1) of the inventive cleaning compositions are stable in the presence of hypochlorite, preferably sodium hypochlorite.

The cleaning compositions of the invention may also comprise enzymes, preferably proteases, lipases, amylases, hydrolases and/or cellulases. They can be added to the cleaning compositions of the invention in any form established in the prior art. In the case of the cleaning compositions of the invention in liquid or gel form, these especially include solutions of the enzymes, advantageously in maximum concentration, with a low water level and/or with added stabilizers. Alternatively, the enzymes can be encapsulated, for example by spray-drying or extrusion of the enzyme solution together with a preferably natural polymer or in the form of capsules, for example those in which the enzymes are enclosed as in a solidified gel or in those of the core-shell type in which an enzyme-containing core has been coated with a water-, air- and/or chemical-impervious protective layer. In coating layers, it is additionally possible to apply further active ingredients, for example stabilizers, emulsifiers, pigments, bleaches or dyes. Capsules of this kind are applied by methods known per se, for example by agitated or roller granulation or in fluidized bed processes. Advantageously, granules of this kind have a low dust level, for example through application of polymeric film formers, and are storage-stable on account of the coating.

In addition, it is possible for enzyme stabilizers to be present in enzyme-containing cleaning compositions of the invention, in order to protect any enzyme present in a cleaning composition of the invention from damage, for example inactivation, denaturation or breakdown, for instance as a result of physical effects, oxidation or proteolytic cleavage. Suitable enzyme stabilizers, depending in each case on the enzyme used, are especially: benzamidine hydrochloride, borax, boric acids, boronic acids or the salts or esters thereof, in particular derivatives having aromatic groups, for instance substituted phenylboronic acids or the salts or esters thereof; peptide aldehydes (oligopolypeptides with a reduced C terminus), amino alcohols such as mono-, di-, triethanol- and -propanolamine and mixtures thereof, aliphatic carboxylic acids up to C₁₂, such as succinic acid, other dicarboxylic acids or salts of the acids mentioned; and end group-capped fatty acid amide alkoxylates; lower aliphatic alcohols and in particular polyols, for example glycerol, ethylene glycol, propylene glycol or sorbitol; and reducing agents and antioxidants such as sodium sulfite and reducing sugars. Further suitable stabilizers are known from the prior art.

Preference is given to using combinations of stabilizers, for example the combination of polyols, boric acid and/or borax, the combination of boric acid or borate, reducing salts and succinic acid or other dicarboxylic acids, or the combination of boric acid or borate with polyols or polyamino compounds and with reducing salts.

Disinfectants and/or preservatives suitable in accordance with the invention are, for example, active antimicrobial ingredients from the groups of the alcohols, aldehydes, antimicrobial acids and salts thereof, carboxylic esters, acid amides, phenols, phenol derivatives, diphenyls, diphenylalkanes, urea derivatives, oxygen and nitrogen acetals and formals, benzamidines, isothiazoles and derivatives thereof such as isothiazolines and isothiazolinones, phthalimide derivatives, pyridine derivatives, antimicrobial surface-active compounds, guanidines, antimicrobial amphoteric compounds, quinolines, 1,2-dibromo-2,4-dicyanobutane, iodo-2-propynyl butyl carbamate, iodine, iodophors and peroxides. Preferred active antimicrobial ingredients are preferably selected from the group comprising ethanol, n-propanol, i-propanol, butane-1,3-diol, phenoxyethanol, 1,2-propylene glycol, glycerol, undecylenoic acid, citric acid, lactic acid, benzoic acid, salicylic acid, thymol, 2-benzyl-4-chlorophenol, 2,2'-methylenebis(6-bromo-4-chlorophenol), 2,4,4'-trichloro-2'-hydroxydiphenyl ether, N-(4-chlorophenyl)-N-(3,4-dichlorophenyl)urea, N,N'-(1,10-decanediyldi-1-pyridinyl-4-ylidene)bis(1-octanamine) dihydrochloride, N,N'-bis(4-chlorophenyl)-3,12-diimino-2,4,11,13-tetraazatetradecanediimide amide, antimicrobial quaternary surface-active compounds, guanidines. Preferred antimicrobial surface-active quaternary compounds contain an ammonium, sulfonium, phosphonium, iodonium or arsonium group, as described, for example, by K. H. Wallhäusser in "Praxis der Sterilisation, Desinfektion - Konservierung: Keimidentifizierung - Betriebshygiene" [Practical Sterilization, Disinfection - Preservation: Microbe Identification - Commercial Hygiene] (5th edition - Stuttgart; New York: Thieme, 1995).

In the context of the invention, the terms "disinfection", "sanitation", "antimicrobial action" and "active antimicrobial ingredient" have the meaning customary in the art, as reflected, for example, by K. H. Wallhäusser in "Praxis der Sterilisation, Desinfektion - Konservierung: Keimidentifizierung - Betriebshygiene" (5th edition - Stuttgart; New York: Thieme, 1995). While disinfection in the narrower sense of medical practice means the killing of theoretically all infection germs, sanitation is the maximum elimination of all germs - including the saprophytic germs that are normally harmless to man.

The polyacrylic and polymethacrylic compounds include, for example, high molecular weight homopolymers of acrylic acid that have been crosslinked with a polyalkenyl polyether, especially an allyl ether of sucrose, pentaerythritol or propylene (INCI name according to International Dictionary of Cosmetic Ingredients from The Cosmetic, Toiletry, and Fragrance Association (CTFA): Carbomer), which are also referred to as carboxyvinyl polymers. In addition, these also include the following acrylic acid copolymers:
(i) copolymers of two or more monomers from the group of acrylic acid, methacrylic acid and the simple esters thereof, preferably formed with C₁-₄-alkanols (INCI Acrylates Copolymer), which include, for instance, copolymers of methacrylic acid, butyl acrylate and methyl methacrylate (CAS designation according to Chemical Abstracts Service: 25035-69-2) or of butyl acrylate and methyl methacrylate (CAS 25852-37-3);
(ii) crosslinked high molecular weight acrylic acid copolymers, which include, for instance, copolymers of C₁₀₋₃₀-alkyl acrylates that have been crosslinked with an allyl ether of sucrose or pentaerythritol and have one or more monomers from the group of acrylic acid, methacrylic acid and simple esters thereof, preferably formed with C₁-C₄-alkanols (INCI Acrylates/C₁₀-C₃₀ Alkyl Acrylate Crosspolymer).

Further thickeners are the polysaccharides and heteropolysaccharides, especially the polysaccharide gums, for example, gum arabic, agar, alginates, carrageenans and salts thereof, guar, guaran, tragacanth, gellan, ramsan, dextran or xanthan and derivatives thereof, e.g. propoxylated guar, and mixtures thereof. Other polysaccharide thickeners, such as starches or cellulose derivatives, can be used as an alternative to, but preferably in addition to, a polysaccharide gum, for example starches from a wide variety of different origins and starch derivatives, e.g. hydroxyethyl starch, starch phosphate esters or starch acetates, or carboxymethyl cellulose or the sodium salt thereof, methyl cellulose, ethyl cellulose, hydroxyethyl cellulose, hydroxypropyl cellulose, hydroxypropyl methyl cellulose or hydroxyethyl methyl cellulose or cellulose acetate.

Particularly preferred polysaccharide thickeners are microbial anionic heteropolysaccharide xanthan gums, which are produced by Xanthomonas campestris and some other species under aerobic conditions with a molecular weight of 2-15 x 10⁶.

Thickeners used may also be sheet silicates. These include, for example, magnesium or sodium-magnesium sheet silicates.

The amount of viscosity regulator, if it is not 0%, is preferably up to 0.5% by weight, more preferably from 0.001 to 0.3% by weight, especially preferably from 0.01 to 0.2% by weight and exceptionally preferably from 0.01 to 0.15% by weight, based in each case on the total weight of the cleaning composition of the invention. The viscosity of the cleaning composition of the invention is preferably from 0.4 to 400 m•Pas.

In addition, the cleaning compositions of the invention may comprise one or more corrosion inhibitors.

Suitable corrosion inhibitors (INCI Corrosion Inhibitors) are, for example, the following substances named according to INCI: Cyclohexylamine, Diammonium Phosphate, Dilithium Oxalate, Dimethylamino Methylpropanol, Dipotassium Oxalate, Dipotassium Phosphate, Disodium Phosphate, Disodium Pyrophosphate, Disodium Tetrapropenyl Succinate, Hexoxyethyl Diethylammonium, Phosphate, Nitromethane, Potassium Silicate, Sodium Aluminate, Sodium Hexametaphosphate, Sodium Metasilicate, Sodium Molybdate, Sodium Nitrite, Sodium Oxalate, Sodium Silicate, Stearamidopropyl Dimethicone, Tetrapotassium Pyrophosphate, Tetrasodium Pyrophosphate and Triisopropanolamine.

Fragrances which may be used are individual odorant compounds, e.g. the synthetic products of the ester, ether, aldehyde, ketone, alcohol and hydrocarbon types. Odorant compounds of the ester type are, for example, benzyl acetate, phenoxyethyl isobutyrate, p-tert-butylcyclohexyl acetate, linalyl acetate, dimethylbenzylcarbinyl acetate, phenylethyl acetate, linalyl benzoate, benzyl formate, ethylmethylphenyl glycinate, allyl cyclohexyl propionate, styrallyl propionate and benzyl salicylate. The ethers include, for example, benzyl ethyl ethers, the aldehydes include, for example, the linear alkanals having 8 to 18 carbon atoms, citral, citronellal, citronellyloxyacetaldehyde, hydroxycitronellal, lilial and bourgeonal, the ketones include, for example, the ionones, alpha-isomethylionone and methyl cedryl ketone, the alcohols include anethol, citronellol, eugenol, geraniol, linalool, phenylethyl alcohol and terpineol; and the hydrocarbons include primarily the terpenes and balsams. Preference is given to using mixtures of different odorants which together produce a pleasing scent note.

Fragrances used may also be natural odorant mixtures, as obtainable from vegetable or animal sources, e.g. pine oil, citrus oil, jasmine oil, lily oil, rose oil or ylang-ylang oil. Essential oils of relatively low volatility, which are usually used as aroma components, are also suitable as perfume oils, for example sage oil, chamomile oil, clove oil, melissa oil, mint oil, cinnamon leaf oil, linden blossom oil, juniper berry oil, vetiver oil, olibanum oil, galbanum oil and ladanum oil.

The amount of the fragrances in the cleaning compositions of the invention, if it is not 0%, is preferably from 0.001 to 2% by weight and more preferably from 0.01 to 2% by weight, based on the total weight of the cleaning compositions of the invention.

Any dyes and pigments present in the cleaning compositions of the invention, either organic or inorganic dyes, may be selected from the corresponding positive list from the Cosmetics Directive or the EU list of cosmetic colorants. Also advantageously used are pearlescent pigments, e.g. pearl essence (mixed guanine/hypoxanthine crystals from fish scales) and mother of pearl (ground seashells), monocrystalline pearlescent pigment, for example bismuth oxychloride (BiOCI), layer-substrate pigments, e.g. mica/metal oxide, silver-white pearlescent pigments composed of TiO₂, interference pigments (TiO₂, different layer thickness), color luster pigments (Fe₂O₃) and combination pigments (TiO₂/Fe₂O₃, TiO₂/Cr₂O₃, TiO₂/Prussian blue, TiO₂/carmine).

The amount of the dyes and pigments in the cleaning compositions of the invention, if it is not 0%, is preferably from 0.01 to 1.0% by weight, based on the total weight of the cleaning compositions of the invention.

If other polymers are used in component Z7), they are preferably selected from copolymers comprising polyalkylene oxide groups and quaternary nitrogen atoms. More preferably the other polymers of component Z7) are copolymers comprising 0.1 to 99.9 mol-%, preferably 20.0 to 80.0 mol-%, more preferably 22.0 to 77.6 mol-% of one or more cationic structural units (D); and
0.1 to 99.9 mol-%, preferably 0.4 to 20.0 mol-%, more preferably 0.5 to 4.4 mol-% of one or more macromonomeric structural units (E),
wherein the one or more cationic structural units (D) are represented by the following general formulae (XI) and/or (XII): 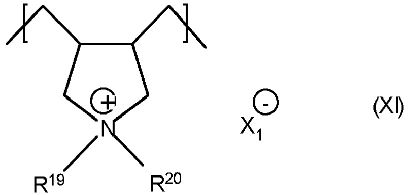 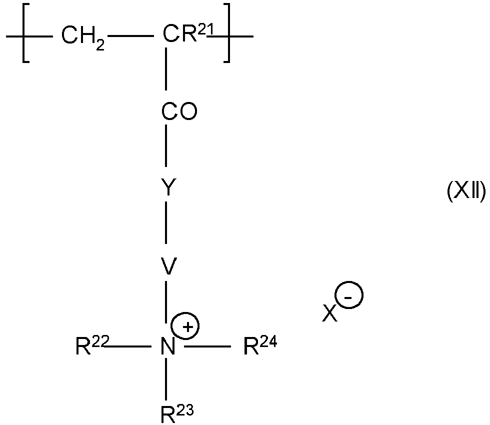
wherein R¹⁹ and R²¹ are equal or different and are independently selected from hydrogen and/or a methyl group;
R²⁰, R²², R²³ and R²⁴ are equal or different and are independently selected from the group consisting of hydrogen, an aliphatic hydrocarbon residue having 1 to 20, preferably 1 to 4 carbon atoms, a cycloaliphatic hydrocarbon residue having 5 to 20, preferably 5 to 8 carbon atoms, an aryl group having 6 to 14 carbon atoms and/or polyethylene glycol (PEG), and preferably are equal or different and independently selected from the group consisting of hydrogen and/or methyl, and particularly preferably are methyl;
Y is the same or different and is selected from oxygen, NH and/or NR²²,
V is the same or different and is selected from -(CH₂)ₓ-, 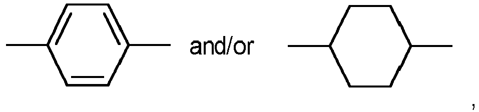
x is the same or different and is a number from 1 to 6;
X and X₁ are equal or different and are independently selected from a halogen atom, C1 to C4-alkylsulfate and/or C1 to C4 alkylsulfonate; and the one or more macromonomeric structural units (E) are represented by the following general formula (XIII): 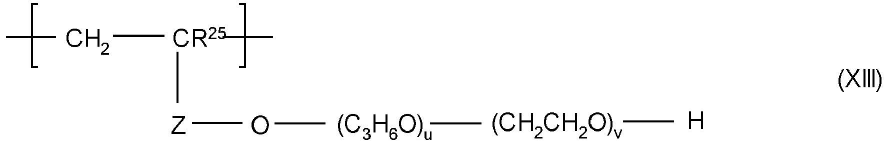
wherein
R²⁵ is the same or different and is H and/or methyl;
Z is the same or different and is C=O and/or O(CH₂)₄, preferably O(CH₂)₄,
u is, on molar average, a number from 0 to 7, preferably from 0 to 6; and v is, on molar average, a number from 1 to 150, preferably from 11 to 150, more preferably from 12 to 150.

In these other polymers the molar amounts of the structural units (D) and (E) are based on the total weight of these other polymers.

The other polymers comprising structural units (D) and E) may preferably also comprise structural units resulting from the polymerization of further monomers such as further nonionic monomers, preferably amides and more preferably N,N-dimethyl acrylamide.

The proportion of component Z7) in the cleaning compositions of the invention, if it is not 0%, is preferably from 0.01 to 10% by weight, more preferably from 0.1 to 1% by weight and especially preferably from 0.1 to 0.5% by weight, based in each case on the total weight of the cleaning compositions of the invention.

The cleaning compositions of the invention preferably comprise
Z1) 0.001 to 10% by weight of component Z1),
Z2) 0.1 to 20% by weight of component Z2),
Z3) an amount of component Z3) that adds up to 100% by weight of the cleaning compositions of the invention,
Z4) 0 to 10% by weight of component Z4),
Z5) 0 to 10% by weight of component Z5),
Z6) 0 to 10% by weight of component Z6), and
Z7) 0 to 10% by weight of component Z7),
   based in each case on the total weight of the cleaning compositions of the invention.

The cleaning compositions of the invention or the one or more copolymers of component Z1) of the cleaning compositions of the invention are advantageously suitable for treatment of hard surfaces, preferably of ceramic, stone, porcelain, glass, stainless steel, metal, plastic, linoleum or wood.

A further subject matter of the present invention therefore is the use of a cleaning composition of the invention or of at least one copolymer of component Z1) of the cleaning compositions of the invention for the treatment of hard surfaces, preferably of ceramic, stone, porcelain, glass, stainless steel, metal, plastic, linoleum or wood.

Preference is given to conducting the use of the invention for treatment of hard surfaces in order to achieve a cleaning effect on the hard surface on which the cleaning composition of the invention or the at least one copolymer of component Z1) of the cleaning compositions of the invention has been employed.

Preference is further given to conducting the use of the invention for treatment of hard surfaces in order to reduce the resoiling of a hard surface on which the cleaning composition of the invention or the at least one copolymer of component Z1) of the cleaning compositions of the invention has been employed.

Preference is further given to conducting the use of the invention for treatment of hard surfaces in order to facilitate the repeat cleaning of the hard surface on which the cleaning composition of the invention or the at least one copolymer of component Z1) of the cleaning compositions of the invention has been employed.

Preference is further given to conducting the use of the invention for treatment of hard surfaces in order to remove grease residues or lime soap residues on the hard surface on which the cleaning composition of the invention or the at least one copolymer of component Z1) of the cleaning compositions of the invention has been employed.

Preference is further given to conducting the use of the invention for treatment of hard surfaces in order to remove scale or to reduce newly deposited scale on the hard surface on which the cleaning composition of the invention or the at least one copolymer of component Z1) of the cleaning compositions of the invention has been employed.

Preference is further given to conducting the use of the invention for treatment of hard surfaces in order to minimize or prevent the formation of a biofilm on the hard surface on which the cleaning composition of the invention or the at least one copolymer of component Z1) of the cleaning compositions of the invention has been employed.

Preference is further given to conducting the use of the invention for treatment of hard surfaces in order to facilitate the rinsing of the hard surface on which the cleaning composition of the invention or the at least one copolymer of component Z1) of the cleaning compositions of the invention has been employed.

In a further preferred embodiment of the invention, the use of the invention for treatment of hard surfaces is conducted in such a way that the cleaning composition of the invention or the at least one copolymer of component Z1) of the cleaning compositions of the invention remains on the hard surface after application ("leave-on" application).

In a further preferred embodiment of the invention, the use of the invention for treatment of hard surfaces is conducted in such a way that the cleaning composition of the invention or the at least one copolymer of component Z1) of the cleaning compositions of the invention is removed from the hard surface after application and preferably rinsed off with water ("rinse-off" application).

The use of the invention for treatment of hard surfaces may e.g. be conducted for cleaning of hard surfaces in the kitchen and sanitary sector, for example in kitchens, bathrooms and toilets, in the household, but also in the industrial sector, for example in butchers' shops, slaughterhouses, dairies, storage tanks for food and drink products or industrial products, and in the public sector, for example building frontages, in swimming baths or in railway stations.

In a further preferred embodiment of the invention, the use of the invention for treatment of hard surfaces is conducted for cleaning of hard surfaces in the bathroom, hard surfaces in the kitchen, floors or toilets.

A further subject matter of the invention is the use of a cleaning composition of the invention, preferably a hard surface cleaner and more preferably a toilet cleaner, or of at least one copolymer of component Z1) of the cleaning compositions of the invention for easier next time cleaning of hard surfaces, preferably in toilets.

A further subject matter of the invention is the use of a cleaning composition of the invention, preferably a hard surface cleaner and more preferably a toilet cleaner, or of at least one copolymer of component Z1) of the cleaning compositions of the invention for preventing the build-up of limescale on hard surfaces, preferably in toilets. Preferred is the use wherein the cleaning composition is a toilet cleaner and the build-up of limescale in toilets is prevented on the surface of the toilet which is under the water line in the toilet.

Toilets always have a little water in the bottom of them. Even after being flushed, they never empty completely. Some water is always trapped in a curved pipe at the base of the toilet known as the S-bend (or S-trap) and forms a water line in the toilet bowl. This amount of water effectively seals off the sewage pipe beneath it, stopping germs and malodor from being released into the bathroom. However, if the water present in the toilet is very hard, a layer of limescale build-up can always be seen, on the surface of the toilet which is under the water line in the toilet.

A further subject matter of the present invention is a method of treating or cleaning a hard surface, which comprises contacting the hard surface with a cleaning composition of the invention or with at least one copolymer of component Z1) of the cleaning compositions of the invention.

The preferred embodiments specified above for the cleaning compositions of the invention are also applicable in a corresponding manner to the inventive use of the cleaning compositions of the invention or of the one or more copolymers of component Z1) of the cleaning compositions of the invention for treatment of hard surfaces, for easier next time cleaning of hard surfaces or for preventing the build-up of limescale on hard surfaces and to the method of the invention for treating or cleaning hard surfaces using a cleaning composition of the invention or at least one copolymer of component Z1) of the cleaning compositions of the invention.

A further subject matter of the present invention is copolymers consisting of components a), b) and c)
a) 15 to 30 mol-%, preferably 20 to 27 mol-%, of structural units derived from one monomer comprising a sulfonic acid group or a sulfonate group, preferably derived from one monomer selected from the group consisting of vinyl sulfonic acid, styrene sulfonic acid, 2-acrylamido-2-methylpropane sulfonic acid, and their corresponding sulfonates, and
b) 60 to 80 mol-%, preferably 65 to 77 mol-%, of structural units derived from one monomer comprising a carboxylic acid group or a carboxylate group, preferably derived from one monomer selected from the group consisting of itaconic acid, methacrylic acid, acrylic acid, maleic acid, methyl maleic acid, and their corresponding carboxylates, and
c) 0.5 to 15 mol-%, preferably 1 to 10 mol-%, of structural units derived from one monomer selected from the group consisting of diallyl dimethyl ammonium salts, (3-acrylamidopropyl)trimethylammonium salts, and [3-(methacryloylamino)propyl]trimethylammonium salts,
   the mole percentages mentioned for components a), b) and c) in each case are based on the sum of the moles of the components a), b) and c) of the copolymer, with the proviso that if the copolymer comprises structural units that only differ in the counterion of the sulfonic acid group or the sulfonate group of component a), or only differ in the counterion of the carboxylic acid group or the carboxylate group of component b), or only differ in the counterion of the ammonium salts of component c), the respective structural units in each of the three cases are considered as being derived from only one monomer.

In the inventive copolymers, a sulfonate group refers to a salt form of its respective sulfonic acid group. The counterion preferably is selected from the group consisting of Na⁺, K⁺, NH₄⁺ and mixtures thereof.

In the inventive copolymers, a carboxylate group refers to a salt form of its respective carboxylic acid group. The counterion preferably is selected from the group consisting of Na⁺, K⁺, NH₄⁺ and mixtures thereof.

In the inventive copolymers, the counterions of the monomers c) preferably are selected from the group consisting of HSO₄⁻, SO₄²⁻, H₃C-O-SO₃⁻, Cl⁻, Br⁻ and mixtures thereof and more preferably are selected from the group consisting of HSO₄⁻, SO₄²⁻, Cl⁻ and mixtures thereof.

Preferably, the inventive copolymers consist of
a) 15 to 30 mol-%, preferably 20 to 27 mol-%, of structural units derived from 2-acrylamido-2-methylpropane sulfonic acid and/or one or more of its salts and preferably from 2-acrylamido-2-methylpropane sulfonic acid and/or its sodium salt, and
b) 60 to 80 mol-%, preferably 65 to 77 mol-%, of structural units derived from acrylic acid and/or one or more of its salts and preferably from acrylic acid and/or its sodium salt, and
c) 0.5 to 15 mol-%, preferably 1 to 10 mol-%, of structural units derived from one or more diallyl dimethyl ammonium salts and preferably from diallyl dimethyl ammonium chloride.

A further subject matter of the present invention is copolymers obtainable by free radical polymerization of monomers a), b) and c)
a) 15 to 30 mol-%, preferably 20 to 27 mol-%, of one monomer comprising a sulfonic acid group or a sulfonate group, preferably one monomer selected from the group consisting of vinyl sulfonic acid, styrene sulfonic acid, 2-acrylamido-2-methylpropane sulfonic acid, and their corresponding sulfonates, and
b) 60 to 80 mol-%, preferably 65 to 77 mol-%, of one monomer comprising a carboxylic acid group or a carboxylate group, preferably one monomer selected from the group consisting of itaconic acid, methacrylic acid, acrylic acid, maleic acid, methyl maleic acid, and their corresponding carboxylates, and
c) 0.5 to 15 mol-%, preferably 1 to 10 mol-%, of one monomer selected from the group consisting of diallyl dimethyl ammonium salts, (3-acrylamidopropyl)trimethylammonium salts, and [3-(methacryloylamino)propyl]trimethylammonium salts,
   the mole percentages mentioned for monomers a), b) and c) in each case are based on the sum of the moles of the monomers a), b) and c),
   with the proviso that if the monomers only differ in the counterion of the sulfonic acid group or the sulfonate group of monomer a), or only differ in the counterion of the carboxylic acid group or the carboxylate group of monomer b), or only differ in the counterion of the ammonium salts of monomer c), the respective monomers in each of the three cases are considered as being only one monomer,
   preferably in water, preferably at 50 to 120°C and more preferably at 80 to 120°C, and preferably initiated by sodium persulfate.

In the context of the present invention the above-given proviso for the monomers is to be understood analogously to the above-given proviso for the structural units, e.g. meaning that acrylic acid and sodium acrylate are considered as being only one monomer.

In the following the inventive copolymers obtainable by free radical polymerization of monomers a), b) and c) are referred to as "copolymers A".

Preferably, the inventive copolymers A are obtainable by free radical polymerization of monomers a), b) and c)
a) 15 to 30 mol-%, preferably 20 to 27 mol-%, of 2-acrylamido-2-methylpropane sulfonic acid and/or one or more of its salts and preferably of 2-acrylamido-2-methylpropane sulfonic acid and/or its sodium salt, and
b) 60 to 80 mol-%, preferably 65 to 77 mol-%, of acrylic acid and/or one or more of its salts and preferably of acrylic acid and/or its sodium salt, and
c) 0.5 to 15 mol-%, preferably 1 to 10 mol-%, of one or more diallyl dimethyl ammonium salts and preferably of diallyl dimethyl ammonium chloride.

Preferably, the structural units of components a), b) and c) of the inventive copolymers (including the inventive copolymers A) are present in the copolymer in a random, blockwise, alternating or gradient distribution.

Preferably, the weight-average molecular weight M_{w} of the inventive copolymers (including the inventive copolymers A) is from 10 000 to 250 000 g/mol, more preferably from 15 000 to 200 000 g/mol and even more preferably from 20 000 to 150 000 g/mol.

The preparation of copolymers of component Z1) of the cleaning compositions of the invention and in particular of the inventive copolymers (including the inventive copolymers A) preferably comprises the following steps:
(i) dissolving one monomer M1) comprising a sulfonic acid group or a sulfonate group, and one monomer M2) comprising a carboxylic acid group or a carboxylate group in water to prepare a solution S1), and
(ii) dissolving one monomer M3) selected from the group consisting of diallyl dimethyl ammonium salts, (3-acrylamidopropyl)trimethylammonium salts, and [3-(methacryloylamino)propyl]trimethylammonium salts in water to prepare a solution S2), and
(iii) heating solution S2), preferably to 50 to 120°C and more preferably to 80 to 120°C, and
(iv) adding solution S1) and a radical polymerization initiator, preferably sodium persulfate, preferably simultaneously, and preferably at the temperature used in step (iii), to solution S2) to prepare a solution S3), and
(v) heating solution S3), preferably to the temperature used in step (iii), until the polymerization reaches the desired polymerization degree, and preferably until the polymerization is complete, and
(vi) cooling the reaction mixture obtained in step (v), preferably to 25°C at atmospheric pressure,
(vii) and optionally neutralizing the reaction mixture obtained in step (vi) to pH 6 to 10.

Preferably, the solution S2) is degassed, for instance with a nitrogen purge or via applying a sequence of depressurization of solution S2) and subsequent repressurization of solution S2) with nitrogen.

"The desired polymerization degree" preferably is reached when the amount of the total monomer residues in the solution S3) is 0.1 mol-% or lower, based on the total amount of the initial monomers used for the polymerization.

The examples below are intended to illustrate the invention in detail without, however, limiting it thereto.

The following abbreviations are used:
- Å: angstrom or angstroms
- ca.: circa
- g: gram or grams
- GPC: gel permeation chromatography
- h: hour or hours
- ID: inside diameter
- L: liter or liters
- min: minute or minutes
- mL: milliliter or milliliters
- mm: millimeter or millimeters
- mol-%: mole percentage
- wt.-%: weight percentage
- µm: micrometer or micrometers

### Example 1 - Synthesis of copolymer 1

A monomer solution consisting of 2-acrylamido-2-methylpropane sulfonic acid (93.5 g, 0.45 mol), acrylic acid (97.5 g, 1.35 mol) and demineralized water (100 g) was prepared in a flask. Demineralized water (93 g) and diallyl dimethyl ammonium chloride (31.5 g, 65 wt.-% aqueous solution, 0.13 mol) were charged into a polymerization reactor. The polymerization reactor was heated to reflux (103°C). At reflux and stirring, the monomer solution from the flask was dosed into the polymerization reactor within a period of 4 h. In parallel, within 4 h 15 min, a 20 wt.-% sodium persulfate aqueous solution (100 g) was dosed. After additional 2 h of reflux of the reaction mixture, the reaction mixture was cooled and neutralized to pH 7-9 with a 50 wt.-% aqueous NaOH solution. Copolymer 1 was obtained as a 43 wt.-% aqueous solution.

Copolymer 1 consists of 23.4 mol-% of structural units derived from 2-acrylamido-2-methylpropane sulfonic acid, 70.1 mol-% of structural units derived from acrylic acid and 6.6 mol-% of structural units derived from diallyl dimethyl ammonium chloride.

### Example 2 - Synthesis of copolymer 2

A monomer solution consisting of 2-acrylamido-2-methylpropane sulfonic acid (95.9 g, 0.46 mol), acrylic acid (100.1 g, 1.39 mol) and demineralized water (506 g) was prepared in a flask and the pH of the solution was adjusted to 5 with 50 wt.-% aqueous NaOH solution. Demineralized water (112 g) and (3-acrylamidopropyl)trimethylammonium chloride (20.8 g, 75 wt.-% aqueous solution, 0.08 mol) were charged into a polymerization reactor. The polymerization reactor was heated to reflux (103 °C). At reflux and stirring, the monomer solution from the flask was dosed into the polymerization reactor within a period of 4 h. In parallel, within 4 h 15 min, a 20 wt.-% sodium persulfate aqueous solution (100 g) was dosed into the polymerization reactor. After additional 2 h of reflux of the reaction mixture, the reaction mixture was cooled and neutralized with 50 wt.-% aqueous NaOH solution (approximately 100 g). Copolymer 2 was obtained as a 28 wt.-% aqueous solution.

Copolymer 2 consists of 24.0 mol-% of structural units derived from 2-acrylamido-2-methylpropane sulfonic acid, 72.1 mol-% of structural units derived from acrylic acid and 3.9 mol-% of structural units derived from (3-acrylamidopropyl)trimethylammonium chloride.

### Example 3 - Synthesis of copolymer 3

A monomer solution consisting of 2-acrylamido-2-methylpropane sulfonic acid (98.5 g, 0.48 mol), acrylic acid (102.7 g, 1.43 mol) and demineralized water (100 g) was prepared in a flask. Demineralized water (108 g) and diallyl dimethyl ammonium chloride (16.2 g, 65 wt.-% aqueous solution, 0.07 mol) were charged into a polymerization reactor. The polymerization reactor was heated to reflux (103°C). At reflux and stirring, the monomer solution from the flask was dosed into the polymerization reactor within a period of 4 h. In parallel, within 4 h 15 min, 100 g of a 20 wt.-% sodium persulfate aqueous solution was dosed. After additional 2 h of reflux of the reaction mixture, the reaction mixture was cooled and neutralized to pH 7-9 with a 50 wt.-% aqueous NaOH solution. Copolymer 3 was obtained as a 43 wt.-% aqueous solution.

Copolymer 3 consists of 24.2 mol-% of structural units derived from 2-acrylamido-2-methylpropane sulfonic acid, 72.5 mol-% of structural units derived from acrylic acid and 3.3 mol-% of structural units derived from diallyl dimethyl ammonium chloride.

### Example 4 - synthesis of copolymer 4

A monomer solution consisting of 2-acrylamido-2-methylpropane sulfonic acid (98.4 g, 0.47 mol), acrylic acid (102.8 g, 1.43 mol) and demineralized water (306 g) was prepared in a flask and the pH of the solution was adjusted to 5 with 50 wt.-% aqueous NaOH solution. Demineralized water (112 g) and (3-acrylamidopropyl)trimethylammonium chloride (13.9 g, 75 wt.-% aqueous solution, 0.05 mol) were charged into a polymerization reactor. The polymerization reactor was heated to reflux (103 °C). At reflux and stirring, the monomer solution from the flask was dosed into the polymerization reactor within a period of 4 h. In parallel, within 4 h 15 min, a 20 wt.-% sodium persulfate aqueous solution (100 g) was dosed into the polymerization reactor. After additional 2 h of reflux of the reaction mixture, the reaction mixture was cooled and neutralized with 50 wt.-% aqueous NaOH solution (approximately 100 g). Copolymer 4 was obtained as a 33 wt.-% aqueous solution.

Copolymer 4 consists of 24.3 mol-% of structural units derived from 2-acrylamido-2-methylpropane sulfonic acid, 73.1 mol-% of structural units derived from acrylic acid and 2.6 mol-% of structural units derived from (3-acrylamidopropyl)trimethylammonium chloride.

### Example 5 - synthesis of polymer 5 (comparative example)

A taurine modified polyacrylic acid polymer 5 according to DE 10 2004 040 848 A1 was prepared to be compared with the inventive copolymers.

Taurine (35.1 g) was dissolved in water (250 g). The pH of the solution was adjusted to 8.75 by adding sodium hydroxide. Polyacrylic acid polymer (20 g) was then added to the solution. The mixture was put into a microwave reactor and heated to 190°C for 30 min. Polymer 5 was obtained as a 20 wt.-% aqueous solution.

### Example 6 - Preparation of a hypochlorite-based toilet cleaner

The toilet cleaner used for examples 7 to 9 was formulated as follows:

| Substance | Amount |
|---|---|
| GENAMINOX LA (lauramine oxide) | 1.0 wt.-% active |
| Lauric acid | 0.6 wt.-% active |
| Sodium hypochlorite | ca. 5 wt.-% active |
| Sodium hydroxide | Adjust the pH of the finished formulation to 13 |
| Demineralized water | Added up to 100 wt.-% |

### Example 7 - Stability test in hypochlorite-based toilet cleaner

Toilet cleaners with 0.2 wt.-% of copolymer 1, 2 and polymer 5 respectively were prepared at room temperature. 50 g of each solution, including a solution of hypochlorite-based toilet cleaner without any further additives as a blank, were then stored in an oven at 50°C for 14 days. The active chlorine value was measured at day 0, 3, 7 and 14, and listed below.

| Test Solution | Active chlorine (wt.-%) | | | |
|---|---|---|---|---|
| | Day 0 | Day 3 | Day 7 | Day 14 |
| Blank (only cleaner) | 2.3 | 2.2 | 1.8 | 0.9 |
| Cleaner + copolymer 1 | 2.3 | 2.2 | 2.0 | 1.1 |
| Cleaner + copolymer 2 | 2.3 | 2.1 | 1.8 | 0.5 |
| Cleaner + polymer 5 | 2.2 | 1.9 | 1,1 | < 0.1 |

Inventive copolymers 1 and 2 are stable in the hypochlorite-based toilet cleaner. However, comparative polymer 5 is not stable in the hypochlorite-based toilet cleaner.

### Example 8 - Limescale build-up prevention

In this test, standard northern European toilets with standard flush (each flush using ca. 7 liters of water) mechanism were used. Each toilet was connected to tap water (with water hardness 15-20 °dH) and was also connected to a waste water pipe to drain flushed water.

The toilet bowls were thoroughly cleaned with 10 wt.-% aqueous citric acid solution, flushed 3 times and dried for at least 3 h before each test. 80 g of a test cleaner was distributed evenly onto the surface of the toilet bowls and the test cleaner was allowed to run down to the waterline. The treated toilet bowls were left for 1 h and 5 flushes were then applied to remove the cleaner residue from the toilet bowls. After that, the toilets were flushed in total 12 times a day for 5 days. The limescale build-up was then evaluated visually after 1, 3 and 5 days and given a score from 0 to 4 (0 - no limescale; 4 - severe limescale build-up). The results are listed below. The hypochlorite-based cleaner, the cleaner + copolymer 1 and the cleaner + copolymer 2 mentioned in the table below are the compositions as described in examples 6 and 7.

| Test Cleaner | Day 1 | Day 3 | Day 5 |
|---|---|---|---|
| Only hypochlorite-based cleaner | 1 | 3 | 4 |
| Cleaner + copolymer 1 | 0 | 0 | 0 |
| Cleaner + copolymer 2 | 0 | 1 | 1 |

According to the results, the inventive copolymers deliver significant limescale build-up inhibition performance.

### Example 9 - Easier next time cleaning

In this test, toilets were cleaned and treated with test cleaners in the same way as described in example 8. After being flushed to remove the cleaner residue, the toilet was left to dry for at least 1 h. An artificial soil (sunflower oil + fat black) was then applied to the surface of the toilet bowl via pipette. The soil was left on the surface for 15 min and the toilets were then flushed (with standard flushes and 15 min interval between two flushes) until the soil was completely removed.

The toilet treated with only the hypochlorite-based cleaner took more than 6 flushes to remove all soil. However, the toilet treated with cleaner + copolymer 1 took only 2 flushes, in which after the first flush, most of the soil was already removed.

## Claims

1. A cleaning composition comprising
Z1) one or more copolymers comprising components a), b) and c)
a) one or more structural units derived from one or more monomers comprising a sulfonic acid group or a sulfonate group, and
b) one or more structural units derived from one or more monomers comprising a carboxylic acid group or a carboxylate group, and
c) one or more structural units derived from one or more cationic monomers,
and
Z2) one or more surfactants
and
Z3) water.

2. The cleaning composition according to claim 1, **characterized in that** the one or more structural units of component a) are derived from one or more monomers selected from the group consisting of vinyl sulfonic acid, styrene sulfonic acid, 2-acrylamido-2-methylpropane sulfonic acid, their corresponding sulfonates, and mixtures thereof.

3. The cleaning composition according to claim 1 or 2, **characterized in that** the one or more structural units of component b) are derived from one or more monomers selected from the group consisting of itaconic acid, methacrylic acid, acrylic acid, maleic acid, methyl maleic acid, their corresponding carboxylates, and mixtures thereof.

4. The cleaning composition according to one or more of claims 1 to 3, **characterized in that** the one or more structural units of component c) are derived from one or more cationic monomers selected from the group consisting of
[2-(acryloyloxy)ethyl]trimethylammonium salts,
[2-(methacryloyloxy)ethyl]trimethylammonium salts,
[2-(acryloylamino)ethyl]trimethylammonium salts,
[2-(methacryloylamino)ethyl]trimethylammonium salts,
[3-(acryloylamino)propyl]trimethylammonium salts,
[3-(methacryloylamino)propyl]trimethylammonium salts, diallyldimethylammonium salts,
and mixtures thereof.

5. The cleaning composition according to one or more of claims 1 to 4, **characterized in that** the one or more copolymers of component Z1) comprise
a) from 0.1 to 99 mol-%, preferably from 15 to 30 mol-% and more preferably from 20 to 27 mol-%, of one or more structural units of component a),
b) from 0.1 to 99 mol-%, preferably from 60 to 80 mol-% and more preferably from 65 to 77 mol-% of one or more structural units of component b), and
c) from 0.1 to 99 mol-%, preferably from 0.5 to 15 mol-% and more preferably from 1 to 10 mol-% of one or more structural units of component c),
the mole percentages mentioned for components a), b) and c) in each case are based on the sum of the moles of the components a), b) and c) of the copolymer.

6. The cleaning composition according to one or more of claims 1 to 5, **characterized in that** the one or more copolymers of component Z1) consist of components a), b) and c)
a) 15 to 30 mol-%, preferably 20 to 27 mol-%, of structural units derived from one monomer comprising a sulfonic acid group or a sulfonate group, preferably derived from one monomer selected from the group consisting of vinyl sulfonic acid, styrene sulfonic acid, 2-acrylamido-2-methylpropane sulfonic acid, and their corresponding sulfonates, and
b) 60 to 80 mol-%, preferably 65 to 77 mol-%, of structural units derived from one monomer comprising a carboxylic acid group or a carboxylate group, preferably derived from one monomer selected from the group consisting of itaconic acid, methacrylic acid, acrylic acid, maleic acid, methyl maleic acid, and their corresponding carboxylates, and
c) 0.5 to 15 mol-%, preferably 1 to 10 mol-%, of structural units derived from one monomer selected from the group consisting of diallyl dimethyl ammonium salts, (3-acrylamidopropyl)trimethylammonium salts, and [3-(methacryloylamino)propyl]trimethylammonium salts,
the mole percentages mentioned for components a), b) and c) in each case are based on the sum of the moles of the components a), b) and c) of the copolymer, with the proviso that if the copolymer comprises structural units that only differ in the counterion of the sulfonic acid group or the sulfonate group of component a), or only differ in the counterion of the carboxylic acid group or the carboxylate group of component b), or only differ in the counterion of the ammonium salts of component c), the respective structural units in each of the three cases are considered as being derived from only one monomer.

7. The cleaning composition according to one or more of claims 1 to 6, **characterized in that** the one or more copolymers of component Z1) consist of components a), b) and c)
a) 15 to 30 mol-%, preferably 20 to 27 mol-%, of structural units derived from 2-acrylamido-2-methylpropane sulfonic acid and/or one or more of its salts and preferably from 2-acrylamido-2-methylpropane sulfonic acid and/or its sodium salt, and
b) 60 to 80 mol-%, preferably 65 to 77 mol-%, of structural units derived from acrylic acid and/or one or more of its salts and preferably from acrylic acid and/or its sodium salt, and
c) 0.5 to 15 mol-%, preferably 1 to 10 mol-%, of structural units derived from one or more diallyl dimethyl ammonium salts and preferably from diallyl dimethyl ammonium chloride,
the mole percentages mentioned for components a), b) and c) in each case are based on the sum of the moles of the components a), b) and c) of the copolymer.

8. The cleaning composition according to one or more of claims 1 to 7, **characterized in that** the structural units of components a), b), c), and, if present, component d) of the one or more copolymers of component Z1) are present in the copolymer in a random, blockwise, alternating or gradient distribution.

9. The cleaning composition according to one or more of claims 1 to 8, **characterized in that** the weight average molecular weight M_{w} of the one or more copolymers of component Z1) is from 10 000 to 250 000 g/mol, preferably from 15 000 to 200 000 g/mol and more preferably from 20 000 to 150 000 g/mol.

10. The cleaning composition according to one or more of claims 1 to 9, **characterized in that** it comprises the one or more copolymers of component Z1) in an amount from 0.001 to 10% by weight, preferably in an amount from 0.01 to 5% by weight and more preferably in an amount from 0.02 to 0.5% by weight, in each case based on the total weight of the cleaning composition.

11. The cleaning composition according to one or more of claims 1 to 10, **characterized in that** the one or more surfactants of component Z2) are selected from the group consisting of anionic surfactants, nonionic surfactants, amphoteric surfactants, cationic surfactants, and mixtures thereof.

12. The cleaning composition according to one or more of claims 1 to 11, **characterized in that** the one or more surfactants of component Z2) are selected from the group consisting of fatty alcohol polyglycol ethers, alkyl polyglycosides, alkylbenzenesulfonates, alkanesulfonates, alkyl ether sulfates, alkyl sulfates, N-acylglucamines, preferably N-acyl-N-methylglucamines, quaternary ammonium compounds, and mixtures thereof.

13. The cleaning composition according to one or more of claims 1 to 12, **characterized in that** the amount of the one or more surfactants of component Z2) is from 0.1 to 20% by weight and preferably from 0.1 to 10% by weight, in each case based on the total weight of the cleaning composition.

14. The cleaning composition according to one or more of claims 1 to 13, **characterized in that** it comprises hypochlorite, preferably sodium hypochlorite, preferably in an amount from 0.5 to 6% by weight and more preferably in an amount from 1 to 5% by weight, in each case based on the total weight of the cleaning composition.

15. Use of a cleaning composition according to one or more of claims 1 to 14 or of at least one copolymer as defined in one or more of claims 1 to 9 for the treatment of hard surfaces, preferably of ceramic, stone, porcelain, glass, stainless steel, metal, plastic, linoleum or wood.

16. Use of a cleaning composition according to one or more of claims 1 to 14, preferably a hard surface cleaner and more preferably a toilet cleaner, or of at least one copolymer as defined in one or more of claims 1 to 9 for easier next time cleaning of hard surfaces, preferably in toilets.

17. Use of a cleaning composition according to one or more of claims 1 to 14, preferably a hard surface cleaner and more preferably a toilet cleaner, or of at least one copolymer as defined in one or more of claims 1 to 9 for preventing the build-up of limescale on hard surfaces, preferably in toilets.

18. The use according to claim 17, **characterized in that** the cleaning composition is a toilet cleaner and the build-up of limescale in toilets is prevented on the surface of the toilet which is under the water line in the toilet.

19. A method of treating or cleaning a hard surface, which comprises contacting the hard surface with a cleaning composition according to one or more of claims 1 to 14 or with at least one copolymer as defined in one or more of claims 1 to 9.

20. Copolymer consisting of components a), b) and c)
a) 15 to 30 mol-%, preferably 20 to 27 mol-%, of structural units derived from one monomer comprising a sulfonic acid group or a sulfonate group, preferably derived from one monomer selected from the group consisting of vinyl sulfonic acid, styrene sulfonic acid, 2-acrylamido-2-methylpropane sulfonic acid, and their corresponding sulfonates, and
b) 60 to 80 mol-% preferably 65 to 77 mol-%, of structural units derived from one monomer comprising a carboxylic acid group or a carboxylate group, preferably derived from one monomer selected from the group consisting of itaconic acid, methacrylic acid, acrylic acid, maleic acid, methyl maleic acid, and their corresponding carboxylates, and
c) 0.5 to 15 mol-%, preferably 1 to 10 mol-%, of structural units derived from one monomer selected from the group consisting of diallyl dimethyl ammonium salts, (3-acrylamidopropyl)trimethylammonium salts, and [3-(methacryloylamino)propyl]trimethylammonium salts,
the mole percentages mentioned for components a), b) and c) in each case are based on the sum of the moles of the components a), b) and c) of the copolymer, with the proviso that if the copolymer comprises structural units that only differ in the counterion of the sulfonic acid group or the sulfonate group of component a), or only differ in the counterion of the carboxylic acid group or the carboxylate group of component b), or only differ in the counterion of the ammonium salts of component c), the respective structural units in each of the three cases are considered as being derived from only one monomer.

21. Copolymer according to claim 20, **characterized in that** it consists of
a) 15 to 30 mol-%, preferably 20 to 27 mol-%, of structural units derived from 2-acrylamido-2-methylpropane sulfonic acid and/or one or more of its salts and preferably from 2-acrylamido-2-methylpropane sulfonic acid and/or its sodium salt, and
b) 60 to 80 mol-%, preferably 65 to 77 mol-%, of structural units derived from acrylic acid and/or one or more of its salts and preferably from acrylic acid and/or its sodium salt, and
c) 0.5 to 15 mol-%, preferably 1 to 10 mol-%, of structural units derived from one or more diallyl dimethyl ammonium salts and preferably from diallyl dimethyl ammonium chloride.

22. Copolymer according to claim 20 or 21, **characterized in that** the structural units of components a), b) and c) are present in the copolymer in a random, blockwise, alternating or gradient distribution.

23. Copolymer according to one or more of claims 20 to 22, **characterized in that** its weight average molecular weight M_{w} is from 10 000 to 250 000 g/mol, preferably from 15 000 to 200 000 g/mol and more preferably from 20 000 to 150 000 g/mol.
